(19) Europäisches Patentamt
European Patent Office
Office européen des brevets

(11) EP 4 386 796 A1

# (12) EUROPEAN PATENT APPLICATION

(43) Date of publication:
**19.06.2024 Bulletin 2024/25**

(21) Application number: **22214355.4**

(22) Date of filing: **16.12.2022**

(51) International Patent Classification (IPC):
***H01G 9/00*** *(2006.01)* ***H01G 9/028*** *(2006.01)*
***H01G 9/052*** *(2006.01)* ***H01G 9/025*** *(2006.01)*
*H01G 9/15 (2006.01)* *H01G 9/055 (2006.01)*
*H01G 9/07 (2006.01)*

(52) Cooperative Patent Classification (CPC):
**H01G 9/0036; H01G 9/025; H01G 9/028; H01G 9/15;** H01G 9/0525; H01G 9/055; H01G 9/151

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Heraeus Epurio GmbH**
**63450 Hanau (DE)**

(72) Inventors:
- **Ishikawa, Akio**
**Tokyo, 112-0012 (JP)**
- **Merker, Udo**
**51368 Leverkusen (DE)**

(74) Representative: **Herzog IP Patentanwalts GmbH**
**Steinstraße 16-18**
**40212 Düsseldorf (DE)**

## (54) PROCESS FOR PRODUCING POLYMER CAPACITORS FOR HIGH RELIABILITY APPLICATIONS

(57) The present invention relates to a process for manufacturing a capacitor, comprising the process steps:
a) provision of a porous electrode body (1) made of an electrode material (2), wherein a dielectric (3) at least partially covers a surface of this electrode material (2);
b) introduction of a liquid composition which comprises an electrically conductive polymer and a dispersing agent into at least a part of the porous electrode body (1) provided in process step a), wherein a conductive layer made from the liquid composition has a conductivity of less than 100 S/cm;
c) at least partial removal of the dispersing agent from the porous electrode body (1) obtained in process step b) for the formation of a solid electrolyte layer (4) that at least partially covers a surface of the dielectric (3);
d) filling at least a part of the pores (5) of the porous electrode body (1) obtained in process step c) with an impregnation solution comprising at least one impregnation solvent, wherein the at least one impregnation solvent has a boiling point (determined at 1013 hPa) of at least 150°C;
e) encapsulation of the porous electrode body (1) obtained in process step d);
f) heating the encapsulated electrode body obtained in process step e) at a temperature of higher than 50°C for more than 10 minutes.

The invention also relates to capacitor manufactured with this process, to the use of an electrolytic capacitor and to electronic circuits.

Fig. 1

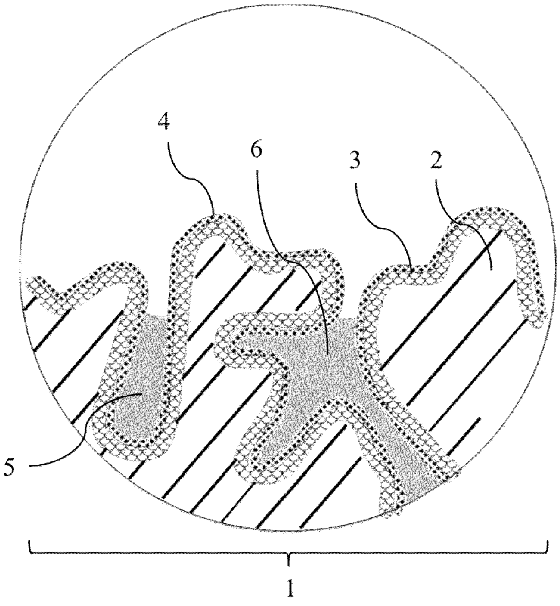


EP 4 386 796 A1

## Description

The present invention relates to a process for manufacturing a capacitor, to a capacitor obtainable by this process, to the use of such a capacitor and to electronic circuits.

A standard electrolytic capacitor generally consists of a porous metal electrode, an oxide layer disposed on the metallic surface, an electrically conductive material, generally a solid, which is introduced into the porous structure, an external electrode (contact), such as a silver layer, and other electrical contacts and an encapsulation. One frequently used electrolytic capacitor is the tantalum electrolytic capacitor, of which the anode electrode is made from the valve metal tantalum, on which a uniform, dielectric layer of tantalum pentoxide has been produced through anodic oxidation (also referred to as "*forming*"). A liquid or solid electrolyte forms the cathode of the capacitor. Aluminium capacitors, of which the anode electrode is made from the valve metal aluminium, on which a uniform, electrically insulating aluminium oxide layer is produced as a dielectric by means of anodic oxidation, are also frequently used. Here also, a liquid electrolyte or a solid electrolyte form the cathode of the capacitor. The aluminium capacitors are generally embodied as wound capacitors or stack-type capacitors.

In view of their high electrical conductivity, π-conjugated polymers are particularly suitable as solid electrolytes in the capacitors described above. π-conjugated polymers are also referred to as conductive polymers or as synthetic metals. They are gaining increasing commercial significance because, by comparison with metals, polymers have advantages with regard to processing, weight and the selective adjustment of properties through chemical modification. Examples of known π-conjugated polymers include polypyrroles, polythiophenes, polyanilines, polyacetylenes, polyphenylenes and poly(p-phenylene-vinylenes), wherein poly(3,4-ethylene-dioxythiophene) (PEDOT) is a particularly important polythiophene which is used technically, because it has a very high conductivity in its oxidised form.

In the prior art, alternative methods for manufacturing solid electrolytes based on conductive polymers in electrolytic capacitors have therefore been developed. For example, DE-A-10 2005 043828 describes a process for manufacturing solid electrolytes in capacitors, in which a dispersion comprising the already polymerised thiophene, for example, the PEDOT/PSS dispersions known from the prior art, is applied to the oxide layer, and then the dispersion medium is removed by evaporation.

However, it has been observed that the electrical properties of capacitors, when used in electronic circuits, deteriorate in the course of their lifetime, especially due to switch-on and switch-off processes in the electronic circuits or due to exposure to an elevated temperature over long time. This applies in particular to the capacitance of capacitors the solid electrolyte layers of which is based on PEDOT/PSS.

The present invention was based on the object of overcoming the disadvantages resulting from the prior art in connection with capacitors, preferably in connection with solid electrolytic capacitors, more preferably in connection with capacitors known from the prior art that comprise a solid electrolyte layer based on π-conjugated polymers such a PEDOT, even more preferably in connection with capacitors known from the prior art that comprise a solid electrolyte layer based on PEDOT/PSS.

In particular, the present invention was based on the object of providing a process for manufacturing a capacitor, by means of which capacitors can be manufactured which, when used in electronic circuits, exhibit electrical properties that are as constant as possible over as long a period as possible, in particular a capacitance that changes as little as possible.

It was also an object of the present invention to provide capacitors with a low equivalent series resistance (ESR) and a high reliability, particularly in terms of the capacitance at elevated temperatures.

The manufacturing process for the advantageous capacitors described above should also be further characterized in that it allows the manufacture of these capacitors in the simplest possible manner, in particular with the fewest possible process steps.

A contribution to at least partly solving at least one, preferably more than one, of the above objects is made by the independent claims. The dependent claims provide preferred embodiments which contribute to at least partly solving at least one of the objects.

**|1a|** A contribution to solving at least one of the objects according to the invention is made by a $1^{st}$ embodiment of a process for manufacturing a capacitor, preferably an electrolytic capacitor, comprising the following process steps:

a) provision of a porous electrode body made of an electrode material, wherein a dielectric at least partially covers a surface of this electrode material;

b) introduction of

i) a liquid composition A, preferably a dispersion A, which comprises an electrically conductive polymer and a dispersing agent, wherein a conductive layer made from the liquid composition A has a conductivity of less than 100 S/cm, preferably less than 25 S/cm, more preferably less than 10 S/cm, even more preferably less than 4

S/cm and most preferable less than 1 S/cm;
or

ii) a liquid composition B, preferably a dispersion B, which comprises an electrically conductive polymer and a dispersing agent, wherein the liquid composition B comprises less than 3 wt.-%, preferably less than 1 wt.-%, more preferably less than 0.5 wt.-%, even more preferably less than 0.1 wt.-% and most preferably less than 0.01 wt.-%, in each case based on the total weight of the liquid composition B, of a high-boiling solvent having a boiling point (determined at 1013 hPa) of at least 150°C, preferably of at least 170°C and more preferably of at least 185°C, wherein it is particularly preferred that liquid composition B is essentially free, preferably free of the high-boiling solvent;
or

iii) a liquid composition C, preferably a dispersion C, which comprises an electrically conductive polymer and a dispersing agent, wherein the liquid composition C comprises less than less than 3 wt.-%, preferably less than 1 wt.-%, more preferably less than 0.5 wt.-%, even more preferably less than 0.1 wt.-% and most preferably less than 0.01 wt.-%, in each case based on the total weight of the liquid composition C, of a high-boiling solvent having a boiling point (determined at 1013 hPa) of at least 150°C, preferably of at least 170°C and more preferably of at least 185°C and wherein a conductive layer made from the liquid composition C has a conductivity of less than 100 S/cm, preferably less than 25 S/cm, more preferably less than 10 S/cm, even more preferably less than 4 S/cm, and most preferably less than 1 S/cm, wherein it is particularly preferred that liquid composition C is essentially free, preferably free of the high-boiling solvent;
into at least a part of the porous electrode body provided in process step a);

c) at least partial removal of the dispersing agent from the porous electrode body obtained in process step b) for the formation of a solid electrolyte layer that at least partially covers a surface of the dielectric;

d) filling at least a part of the pores of the porous electrode body obtained in process step c) with an impregnation solution comprising at least one impregnation solvent, wherein the at least one impregnation solvent has a boiling point (determined at 1013 hPa) of at least 150°C, preferably of at least 170°C and more preferably of at least 190°C;

e) encapsulation of the porous electrode body obtained in process step d), wherein it is preferred that less than 20 wt.-%, preferably less than 10 wt.-% and more preferably less than 1 wt.-% of the impregnation solution that has been used in process step d) to fill a part of the pores of the porous electrode body evaporates before encapsulating the porous electrode body and wherein it is even more preferred that essentially the entire amount, most preferred the entire amount, of the impregnation solution that has been used in process step d) to fill a part of the pores of the porous electrode body remains in the porous electrode body before it is encapsulated;

f) heating the encapsulated electrode body obtained in process step e) at a temperature of higher than 50°C, more preferably of higher than 75°C and even more preferably of higher than 100°C for more than 10 minutes, preferably for more than 20 minutes and more preferably of more than 30 minutes.

The term *"a high-boiling solvent having a boiling point (determined at 1013 hPa) of at least 150°C'* as used herein preferably refers to a compound that actually boils (i. e. that changes its aggregate state from the liquid state to the gaseous state) at a temperature of at least 150°C. This term preferably does not comprise compounds that actually do not boil but decompose before boiling at elevated temperatures (such as polyethylene glycol 400).

The combination of process steps b) and c) can be performed only once or can be repeated several times, for example 2 times, 3 times, 4 times, 5 times, 6 times, 7 times, 8 times, 9 times or at least 10 times.

According to a first and most preferred variant of the process according to the present invention in process step b) liquid composition A, preferably dispersion A, is introduced into at least a part of the porous electrode body provided in process step a). In this context it is also preferred that a conductive layer made from the liquid composition A has a conductivity of not less than 0.1 S/cm and preferably not less than 0.2 S/cm. Preferably, a conductive layer made from the liquid composition A has a conductivity in the range from 0.1 S/cm to less than 10 S/cm, even more preferable in the range from 0.1 S/cm to less than 4 S/cm and most preferable in the range of 0.1 S/cm to less than 1 S/cm)

According to a second variant of the process according to the present invention in process step b) liquid composition B, preferably dispersion B, is introduced into at least a part of the porous electrode body provided in process step a).

According to a third variant of the process according to the present invention in process step b) liquid composition C, preferably dispersion C, is introduced into at least a part of the porous electrode body provided in process step a).

In this context it is also preferred that a conductive layer made from the liquid composition C has a conductivity of not less than 0.1 S/cm and preferably not less than 0.2 S/cm. Preferably, a conductive layer made from the liquid composition C has a conductivity in the range from 0.1 S/cm to less than 10 S/cm, even more preferable in the range from 0.1 S/cm to less than 4 S/cm and most preferable in the range of 0.1 S/cm to less than 1 S/cm)

The liquid compositions A, B or C used in process step b) can be present in the form of a solution or a dispersion. However, the transitions here can be fluid. For that reason, no distinction is made hereafter between the terms "dispersed" and "dissolved". Likewise, no distinction is made between "dispersion" and "solution" or between "dispersing agent" and "solvent". Rather these terms are used synonymously hereafter. However, liquid compositions A, B or C are preferably present in the form of dispersions in which the electrically conductive polymer is dispersed in the dispersion agent.

**|2a|** According to a preferred embodiment of the process according to the invention, the electrode material is aluminium and the dielectric is aluminium oxide, preferably $Al_2O_3$. This preferred embodiment is a 2$^{nd}$ embodiment of the process according to the present invention, that preferably depends on the 1$^{st}$ embodiment.

**|3a|** According to a further preferred embodiment of the process according to the invention, the liquid composition A, B or C, preferably liquid composition A, used in process step b) comprises particles of the electrically conductive polymer. In this context it is particularly preferred that the particles have a diameter $d_{50}$ in a range of from 1 to 100 nm, preferably in a range of from 1 to below 70 nm, preferably in a range of from 1 to 50 nm, particularly preferably in a range from 1 to 40 nm and more particularly preferably in a range of from 5 to 30 nm. The determination of the diameter of the particles is carried out via ultra-centrifuge measurement. This preferred embodiment is a 3$^{rd}$ embodiment of the process according to the present invention, that preferably depends on the 1$^{st}$ or the 2$^{nd}$ embodiment.

**|4a|** According to a further preferred embodiment of the process according to the invention the electrically conductive polymer comprises at least one polymer selected from the group consisting of a polythiophene, a polypyrrole, a polyaniline and a mixture of at least two thereof. This preferred embodiment is a 4$^{th}$ embodiment of the process according to the present invention, that preferably depends on any of the 1$^{st}$ to the 3$^{rd}$ embodiment.

**|5a|** According to a further preferred embodiment of the process according to the invention the electrically conductive polymer is poly(3,4-ethylene-dioxy-thiophene) or a derivative thereof. This preferred embodiment is a 5$^{th}$ embodiment of the process according to the present invention, that preferably depends on any of the 1$^{st}$ to the 4$^{th}$ embodiment.

**|6a|** According to a further preferred embodiment of the process according to the invention liquid composition A, B or C, preferably liquid composition A, used in process step b) additionally comprises at least one polymeric anion. This preferred embodiment is a 6$^{th}$ embodiment of the process according to the present invention, that preferably depends on any of the 1$^{st}$ to the 5$^{th}$ embodiment.

**|7a|** According to a further preferred embodiment of the process according to the invention the polymeric anion is polystyrene sulfonic acid or a derivative thereof. In this context it is particularly preferred that the electrically conductive polymer in liquid composition A, B or C, preferably in liquid composition A, used in process step b) is present in the form a polythiophene/(poly)anion-complex, wherein the polythiophene is poly(3,4-ethylenedioxythiophene) and the polyanion is an anion of polystyrene sulfonic acid. This preferred embodiment is a 7$^{th}$ embodiment of the process according to the present invention, that preferably depends on the 6$^{th}$ embodiment.

**|8a|** According to a further preferred embodiment of the process according to the invention liquid composition A, B or C, preferably liquid composition A, used in process step b) has a pH-value (determined at 25°C) in the range from 2.5 to 8.0, preferably in the range from 2.5 to 7 and more preferably in the range from 3 to 6. This preferred embodiment is an 8$^{th}$ embodiment of the process according to the present invention, that preferably depends on any of the 1$^{st}$ to the 7$^{th}$ embodiment.

**|9a|** According to a further preferred embodiment of the process according to the invention in process step d) at least 25 vol-%, more preferably at least 30 vol-%, even more preferably at least 40 vol-%, even more preferably at least 50 vol-%, even more preferably at least 75 vol-% and most preferably at least 90 vol-% of the open pore volume of the porous electrode body obtained in process step c) are filled with the impregnation solution. This preferred embodiment is a 9$^{th}$ embodiment of the process according to the present invention, that preferably depends on any of the 1$^{st}$ to the 8$^{th}$ embodiment.

**|10a|** According to a further preferred embodiment of the process according to the invention the impregnation solution used in process step d) has an ionic conductivity of less than 1000 μS/cm, preferably less than 100 μS/cm, even more preferably less than 10 μS/cm and most preferably less than 1 μS/cm. This preferred embodiment is a 10$^{th}$ embodiment of the process according to the present invention, that preferably depends on any of the 1$^{st}$ to the 9$^{th}$ embodiment.

**|11a|** According to a further preferred embodiment of the process according to the invention the impregnation solution used in process step d) comprises a mixture of at least two of the impregnation solvents. This preferred embodiment is an 11$^{th}$ embodiment of the process according to the present invention, that preferably depends on any of the 1$^{st}$ to the 10$^{th}$ embodiment.

**|12a|** According to a further preferred embodiment of the process according to the invention the impregnation

solution used in process step d) comprises the at least one impregnation solvent in an amount of at least 50 wt.-%, preferably of at least 75 wt.-%, even more preferably of at least 90 wt.-%, and most preferable of at least 95 wt.-%, in each case based on the total weight of the impregnation solution. In case of two of more impregnation solvents, these amounts represent the total amount of impregnation solvents. This preferred embodiment is a 12th embodiment of the process according to the present invention, that preferably depends on any of the 1st to the 11th embodiment.

**|13a|** According to a further preferred embodiment of the process according to the invention the at least one impregnation solvent in the impregnation solution used in process step d) has a melting point of less than 15°C, preferably of less than 5°C and even more preferably of less than -5°C. This preferred embodiment is a 13th embodiment of the process according to the present invention, that preferably depends on any of the 1st to the 12th embodiment.

**|14a|** According to a further preferred embodiment of the process according to the invention the at least one impregnation solvent in the impregnation solution used in process step d) has a boiling point (determined at 1013 hPa) of at least 200°C and less than 330°C. This preferred embodiment is a 14th embodiment of the process according to the present invention, that preferably depends on any of the 1st to the 13th embodiment.

**|15a|** According to a further preferred embodiment of the process according to the invention the at least one impregnation solvent in the impregnation solution used in process step d) comprises at least one hydroxy group and has a molecular weight in the range from 70 to 195 g/mol, preferable from 70 to 180 g/mol. In this context it is further preferred that the at least one impregnation solvent in the impregnation solution used in process step d) is a compound that comprises two hydroxy groups or is a compound that comprises one hydroxy group and one ether group, preferably one alkyl ether group. This preferred embodiment is a 15th embodiment of the process according to the present invention, that preferably depends on any of the 1st to the 14th embodiment.

**|16a|** According to a further preferred embodiment of the process according to the invention the at least one impregnation solvent in the impregnation solution used in process step d) is a compound that comprises two hydroxy groups or is a compound that comprises one hydroxy group and one ether group, preferably one alkyl ether group, wherein a polyglycol with 2-4 repetition units is particularly preferred as the impregnation solvent. This preferred embodiment is a 16th embodiment of the process according to the present invention, that preferably depends on any of the 1st to the 15th embodiment.

**|17a|** According to a further preferred embodiment of the process according to the invention the at least one impregnation solvent in the impregnation solution used in process step d) is selected from the group consisting of diethylene glycol, triethylene glycol, tetraethylene glycol and a mixture of at least two thereof, diethylene glycol and triethylene glycol being particularly preferred. This preferred embodiment is a 17th embodiment of the process according to the present invention, that preferably depends on any of the 1st to the 16th embodiment.

**|18a|** According to a further preferred embodiment of the process according to the invention liquid composition A, B or C, preferably liquid composition A, used in process step b), the impregnation solution used in process step d) or both, preferably the impregnation solution used in process step d), additionally comprise a stabilizer. This preferred embodiment is a 18th embodiment of the process according to the present invention, that preferably depends on any of the 1st to the 17th embodiment. Preferred stabilizers are those compounds which are mentioned in WO 2012/041507 A1, wherein aromatic compounds containing at least two OH groups and one further functional group with a hetero atom which differs from carbon are particularly preferred. Examples of suitable stabilizers are 3,4,5-trihydroxybenzoic acid and derivatives thereof like 3,4,5-trihydroxybenzoic acid esters (gallic acid esters), in particular alkyl esters, alkenyl esters, cycloalkyl esters, cycloalkenyl esters, aryl esters, having preferably in each case 1 to 15 C atoms in the aryl or alkyl groups of the esters, are furthermore to be mentioned. Particularly preferred are gallic acids and gallic acids esterified with sugars, which are often called tannin or gallotannins (cf. Römpp Chemie, 10th edition (1999), page 4391). Also suitable as stabilizers are the *"hydroxy-group-containing aromatic compounds"* that are mentioned in paragraph [0049] of EP 1 798 259 A1, the *"anti-oxidants"* that are mentioned in paragraph [0025] of EP 1 043 720 A1 and the *"aromatic compounds exclusive of sulfo groups and containing at least two hydroxy groups"* that are mentioned on pages 10 and 11 of WO 2008/055834 A1. In this context it is also preferred to use the stabiliser or stabilisers in a concentration in a range of from 0.1 wt.-% to 60 wt.-%, preferably in a range of from 1 wt.-% to 25 wt.-% and particularly preferably in a range of from 2 wt.-% to 10 wt.-%, based on the total weight of the impregnation solution. If liquid composition A, B or C, preferably liquid composition A, used in process step b) comprises the stabilizer, it is preferred to use the stabiliser or stabilisers in a concentration in a range of from 0.1 wt.-% to 20 wt.-%, preferably in a range of from 0.5 wt.-% to 10 wt.-% and particularly preferably in a range of from 1 wt.-% to 5 wt.-% based on the total weight of the liquid composition.

**|19a|** According to a further preferred embodiment of the process according to the invention the process does not comprises any process step in which at least a part of an impregnation solution comprising at least one impregnation solvent having a boiling point (determined at 1013 hPa) of at least 150°C, preferably of at least 170°C and more preferably of at least 190°C, that has been used to fill at least a part of the pores of the porous electrode body, is removed before the porous electrode body is encapsulated in process step e). This preferred embodiment is a 19th embodiment of the process according to the present invention, that preferably depends on any of the 1st to the 18th embodiment.

**|1b|** A contribution to solving at least one of the objects according to the invention is made by a 1st embodiment

of a capacitor obtainable, preferably obtained, by the process according to the present invention, preferably by the process according to any of the 1st to the 19th embodiment.

**|2b|** According to a further preferred embodiment of capacitor 1 according to the invention the capacitor has a rated voltage in the range from 1 to 250 V, preferably in the range from 6 to 100 V and more preferably in the range from 10 to 63 V. This preferred embodiment is a 2nd embodiment of capacitor 1 according to the present invention, that preferably depends on the 1st embodiment.

**|1c|** A contribution to solving at least one of the objects according to the invention is made by the use of a capacitor according to the 1st or the 2nd embodiment in electronic circuits, for example, as smoothing capacitors (*"filter capacitors"*) or suppression capacitors *("decoupling capacitors").* Electronic circuits can be found, for example, in computers (desktop, laptop, server), in computer peripheral devices (for example PC cards), in portable electronic devices, such as mobile telephones, digital cameras, chargers or consumer electronics, in consumer electronics equipment, such as in CD/DVD players and computer-game consoles, in navigation systems, in telecommunications devices for example base stations for mobile communication, in household equipment, in medical technology, for example, for defibrillators, in power supplies such as those based on renewable energy or in automobile electronics, for example, for hybrid or electric cars.

**|1d|** A contribution to solving at least one of the objects according to the invention is made by an electronic circuit comprising a capacitor according to the 1st or the 2nd embodiment.

Process step a)

In process step a) of the process according to the invention, a porous electrode body made of an electrode material is provided, wherein a dielectric at least partially covers a surface of this electrode material.

In principle, the porous electrode body can be manufactured in that a valve-metal powder with a high surface area is pressed and sintered to form a porous electrode body. In this context, an electrical contact wire preferably made from a valve metal, such as tantalum, is conventionally pressed into the porous electrode body. The porous electrode body is then coated with a dielectric, that is, an oxide layer, for example, by electrochemical oxidation. As an alternative, metal films can be etched and coated with a dielectric by electrochemical oxidation in order to obtain an anode film with a porous region. In the case of a wound capacitor, an anode film with a porous region, which forms the electrode body, and a cathode film are separated by separators and wound up.

Within the scope of the invention, metals of which the oxide coatings do not allow the flow of current uniformly in both directions are understood as valve metals. With a voltage applied at the anode, the oxide layers of the valve metals block the flow of current, while in the case of a voltage applied to the cathode, considerable currents occur, which can destroy the oxide layer. The valve metals include Be, Mg, Al, Ge, Si, Sn, Sb, Bi, Ti, Zr, Hf, V, Nb, Ta and W and an alloy or compound of at least one of these metals with other elements. The most well-known representatives of the valve metals are Al, Ta and Nb. Combinations of electrical properties comparable with a valve metal are those with metallic conductivity, which can be oxidised and of which the oxide layers provide the properties described above. For example, NbO shows metallic conductivity, but is not generally regarded as a valve metal. However, layers of oxidised NbO show the typical properties of valve-metal oxide layers, so that NbO or an alloy or compound of NbO with other elements are typical examples of such compounds with electrical properties comparable with a valve metal. Electrode materials made of tantalum, aluminium and such electrode materials which are based on niobium or niobium oxide are preferred. Aluminium is particularly preferred as an electrode material.

For the manufacture of the porous electrode body often with a porous region, the valve metals can be sintered, for example, in powdered form to provide a generally porous electrode body, or alternatively, a porous structure is imprinted onto a metallic body. The latter can be implemented, for example, by etching a film.

In the following, for the sake of simplicity, bodies with a porous region are also referred to as porous. For example, electrode bodies with a porous region are also referred to as porous electrode bodies. On the one hand, the porous bodies can be penetrated by a plurality of channels and therefore be sponge-like. This is often the case if tantalum is used in the construction of the capacitor. On the other hand, pores can be present only at the surface, and the region disposed below the surface pores can be formed in a solid manner. This is often observed, if aluminium is used in the capacitor construction.

The porous electrode bodies manufactured in this manner are then oxidised, for example in an appropriate electrolyte, for example, phosphoric acid or an aqueous solution of ammonium adipate, by applying a voltage, in order to form the dielectric. The magnitude of this forming voltage is dependent upon the oxide-layer thickness to be achieved or respectively the subsequent operating voltage of the capacitor. Preferred forming voltages lie in a range of from 1 to 1000 V, particularly preferably in a range of from 10 to 200 V, more particularly preferably in a range of from 15-100 V, more preferably in a range of from 20-50 V.

The porous electrode bodies used preferably have a porosity of 10 to 90 %, preferably of 30 to 80 %, particularly preferably of 50 to 80 %, and an average pore diameter of from 10 to 10000 nm, preferably from 50 to 5000 nm, particularly

preferably from 100 to 3000 nm.

According to a special embodiment of the process according to the invention, the electrolytic capacitor to be manufactured is an aluminium wound capacitor. In this case, in process step a), a porous aluminium film as electrode material is formed anodically, whereby an aluminium-oxide coating is formed as the dielectric. The aluminium film (anode film) thus obtained is then provided with a contact wire and wound up with a further porous aluminium film (cathode film) also provided with a contact wire, whereby these two films are separated from one another by one or more separator papers, which are based, for example, on cellulose or preferably on synthetic papers. After the winding, the anode bodies obtained in this manner are fixed, for example, by means of an adhesive tape. The separator paper or papers can be carbonised by heating in an oven. This manner of manufacturing anode bodies for aluminium wound capacitors is sufficiently known from the prior art and is described, for example in US 7,497,879 B2.

Process steps b) and c)

In process step b) of the process according to the invention, liquid composition A, B or C as described in connection with the 1st embodiment of the process according to the present invention, preferably liquid composition A (subsequently simply referred to as - the liquid composition -), preferably in the form of a dispersion, which comprises an electrically conductive polymer and a dispersing agent, is introduced into at least a part of the porous electrode body provided in process step a). In process step c) the dispersing agent is then at least partially removed for the formation of a solid electrolyte that at least partially covers a surface of the dielectric.

The liquid composition is introduced into the porous region using known processes, for example, immersion, dipping, pouring, dripping, injection, spraying, spreading, painting or printing, for example, ink-jet printing, screen printing or tampon printing. The introduction is preferably carried out in that the porous electrode body provided in process step a) is immersed in the liquid composition and is accordingly impregnated with this liquid composition. The immersion into or the impregnation with the liquid composition is preferably implemented for a duration in a range of from 1 second to 120 min, particularly preferably in a range of from 10 seconds to 60 min and most preferably in a range of from 30 seconds to 15 min. The introduction of the liquid composition into the anode body can be facilitated, for example, by increased or reduced pressure, vibration, ultrasound or heat.

The introduction of the liquid composition into the porous electrode body can occur directly or using an adhesion promoter, for example, a silane, such as organofunctional silanes or their hydrolysates, for example, 3-glycidoxy-propyltrialkoxysilane, 3-aminopropyltriethoxysilane, 3-mercaptopropyl-trime-thoxysil-ane, 3-methacryloxypropyltrimethoxysilane, vinyltrimethoxysilane or octyltriethoxysilane, and/or one or more other functional layers.

By means of the introduction it is preferably achieved that the liquid composition tends to a lesser extent to cover over the pores of the porous region with a layer. Rather, the surfaces of the cavities of the pores are at least partially coated with the liquid composition. In this manner, the particles present in the liquid composition not only form a layer covering the openings of the pores; at least parts, often also all regions of the surface of the pores are covered with a layer of particles of the liquid composition.

The term *"polymers",* as it is used within the scope of the present invention, includes within the sense of the invention all compounds with more than one identical or different repeating unit.

The term *"electrically conductive polymers"* refers here in particular to the compound class of $\pi$-conjugated polymers, which have an electrical conductivity after oxidation or reduction.

The electrically conductive polymer in the liquid composition is preferably selected from the group consisting of polythiophenes, polypyrroles and polyanilines, which are optionally substituted.

Particularly preferably, the electrically conductive polymer comprises a polythiophene with repeating units selected from the group consisting of the general formula (I), the general formula (II) or the general formula (III) or a combination of at least two thereof. In the following possible variants, the electrically conductive polymer in the dispersion comprises at least one polythiophene with repeating units of the general formula (I) or of the general formula (II) or of the general formula (III) or repeating units of the formulas (I) and (II) or repeating units of the formulas (I) and (III) or repeating units of the formulas (II) and (III) or repeating units of the formulas (I), (II) and (III),

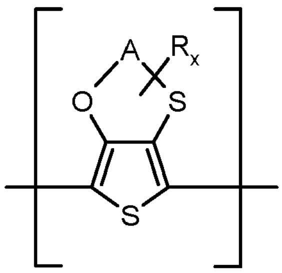

(I)

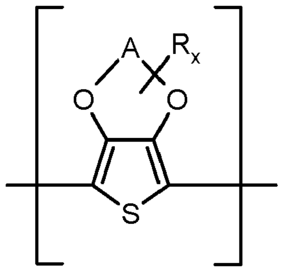

(II)

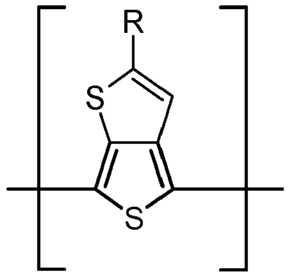

(III)

wherein

A denotes an optionally substituted $C_1$-$C_5$-alkylene residue,

R denotes a linear or branched, optionally substituted $C_1$-$C_{18}$-alkyl residue, an optionally substituted $C_5$-$C_{12}$-cycloalkyl residue, an optionally substituted $C_6$-$C_{14}$-aryl residue, an optionally substituted $C_7$-$C_{18}$-aralkyl residue, an optionally substituted $C_1$-$C_4$-hydroxyalkyl residue or a hydroxyl residue,

x denotes an integer from 0 to 8 and,

in the case that several residues R are bound to A, these can be identical or different.

The general formulas (I) and (II) should be understood such that x substituents R can be bound to the alkylene residue.

Polythiophenes with repeating units of the general formula (I) or (II) or repeating units of the general formula (I) and (II), wherein A denotes an optionally substituted $C_2$-$C_3$-alkylene residue and x denotes 0 or 1 are particularly preferred. Poly(3,4-ethylenedioxythiophene), which is optionally substituted, is quite particularly preferred as a conductive polymer of the solid electrolyte.

Within the framework of the invention, the prefix poly- is understood to mean that more than one identical or different repeating unit is contained in the polymer or polythiophene. The polythiophenes comprise in total n repeating units of the general formula (I) or of the general formula (II) or of the general formula (III) or of the general formulas (I) and (II) or of the general formulas (I) and (III) or of the general formulas (II) and (III) or of the general formulas (I), (II) and (III), wherein n is an integer from 2 to 2000, preferably 2 to 100. The repeating units of the general formula (I) or of the general formula (II) or of the general formula (III) or the repeating units of the general formulas (I) and (II) or the repeating units of the general formulas (I) and (III) or the repeating units of the general formulas (II) and (III) or the repeating units of the general formulas (I), (II) and (III) can be respectively identical or different in each case within one polythiophene. Polythiophenes with respectively identical repeating units of the general formula (I) or of the general formula (II) or of the general formula (III) or with respectively identical repeating units of the general formulas (I) and (II), or of the general formulas (I) and (III), or of the general formulas (II) and (III), or with respectively identical repeating units of the general formulas (I), (II) and (III) are preferred. Polythiophenes with respectively identical repeating units of the general formula (I) or of the general formula (II) or with respectively identical repeating units of the general formulas (I) and (II) are particularly preferred.

The polythiophenes preferably carry H in each terminal group.

Within the scope of the invention, $C_1$-$C_5$-alkylene residues A are preferably methylene, ethylene, n-propylene, n-butylene or n-pentylene. $C_1$-$C_{18}$-alkyl residues R preferably denote linear or branched $C_1$-$C_{18}$-alkyl residues such as methyl, ethyl, n- or iso-propyl, n-, iso-, sec- or tert-butyl, n-pentyl, 1-methylbutyl, 2-methylbutyl, 3-methylbutyl, 1-ethylpropyl, 1,1-dimethylpropyl, 1,2-dimethylpropyl, 2,2-dimethylpropyl, n-hexyl, n-heptyl, n-octyl, 2-ethylhexyl, n-nonyl, n-decyl, n-undecyl, n-dodecyl, n-tridecyl, n-tetradecyl, n-hexadecyl or n-octadecyl, $C_5$-$C_{12}$-cycloalkyl residues R denote, for example, cyclopentyl, cyclohexyl, cycloheptyl, cyclooctyl, cyclononyl or cyclodecyl, $C_5$-$C_{14}$-aryl residues R denote, for example, phenyl or naphthyl, and $C_7$-$C_{18}$-aralkyl residues R, for example, benzyl, o-, m-, p-tolyl, 2,3-, 2,4-, 2,5-, 2,6-, 3,4-, 3,5-xylyl or mesityl. The above list is provided for the purpose of exemplary explanation of the invention and should not be regarded as exclusive.

As optional further substituents for the residues A and/or the residues R, numerous organic groups come under consideration within the scope of the invention, for example, alkyl-, cycloalkyl-, aryl-, aralkyl-, alkoxy, halogen-, ether-, thioether-, disulfide-, sulfoxide-, sulfon-, sulfonate-, amino-, aldehyde-, keto-, carboxylic ester-, carboxylic acid-, carbonate-, carboxylate-, cyano-, alkylsilane- and alkoxysilane groups and carboxyl amide groups.

The residues A and R listed above and/or the further substituents of the residues A and R, for example, come into consideration as substituents for polyaniline or polypyrrole. Un-substituted polyanilines are preferred.

The scope of the invention includes all of the general residue definitions, parameters and explanations presented above and listed below or named in the preferred ranges, together with one another, that is to say, in any combination between the respective ranges and preferred ranges.

The polythiophenes used in the preferred process as a solid electrolyte can be neutral or cationic. In preferred embodiments, they are cationic, wherein *"cationic"* relates only to the charges provided on the main polythiophene chain.

Dependent upon the substituent on the residues, the polythiophenes can carry positive and negative charges within the structural unit, whereby the positive charges are disposed on the main polythiophene chain and the negative charges optionally on the residues R substituted by sulfonate or carboxylate groups. Accordingly, the positive charges of the polythiophene main chain can be compensated in part or completely by the anionic groups optionally present on the residues R. In general, in these cases, the polythiophenes can be cationic, neutral or even anionic. However, within the scope of the invention they are all regarded as cationic polythiophenes, because the positive charges on the main polythiophene chain are of decisive importance. The positive charges are not shown in the formulas, because their precise number and position cannot be accurately determined. The number of positive charges, however, is at least 1 and at most n, wherein n denotes the total number of all repeating units (identical or different) within the polythiophene.

For the compensation of the positive charge, provided this does not already take place through the optionally sulfonate-substituted or carboxylate-substituted and therefore negatively charged residues R, the cationic polythiophenes require anions as counterions.

The counterions can be monomeric or polymeric anions, the latter are also referred to below as polyanions. Polymeric anions are preferred by comparison with monomeric anions, because they contribute to the formation of the film and, because of their size, lead to thermally more stable electrically conductive films.

Polymeric anions here can be, for example, anions of polymeric carboxylic acids, such as polyacrylic acids, polymethacrylic acid or polymaleic acids, or polymeric sulfonic acids, such as polystyrene sulfonic acids and polyvinyl sulfonic acids. These polycarboxylic and polysulfonic acids can also be copolymers of vinyl-carboxylic and vinylsulfonic acid with other polymerisable monomers, such as acrylic esters and styrene.

An anion of a polymeric carboxylic acid or sulfonic acid in the particles mentioned is preferred as a polymeric anion.

The anion of polystyrene sulfonic acid (PSS), which is present with the use of polythiophene, especially of poly(3,4-ethylenedioxythiophene), preferably complex-bound in the form of the PEDOT/PSS complexes known from the prior art, is particularly preferred as the polymeric anion. Such complexes can be obtained through oxidative polymerisation of the thiophene monomers, preferably 3,4-ethylenedioxythiophene, in aqueous solution in the presence of polystyrene sulfonic acid.

The molecular weight of the poly-acids providing the polyanions is preferably 1000 to 2 000 000, by particular preference 2000 to 500 000. The polyacids or their alkaline salts are commercially available, for example, polystyrene sulfonic acids and polyacrylic acids, but can also be manufactured using known processes (see, for example, Houben Weyl, Methoden der organischen Chemie, Vol. E 20 Makromolekulare Stoffe, Part 2, (1987), [Methods of Organic Chemistry, Macromolecular Substances] pages 1141 et seq.).

The polymer anion(s) and electrically conductive polymers can be contained in the liquid composition, especially in a weight ratio of 0.5 : 1 to 50 : 1, preferably of 1 : 1 to 30 : 1, particularly preferably 1.5 : 1 to 20 : 1. The weight of the electrically conductive polymers in this context corresponds to the weighed amount of the monomers used, on the assumption that a complete conversion takes place during the polymerisation.

As monomeric anions, for example, those of $C_1$-$C_{20}$-alkane sulfonic acids, such as methane-, ethane-, propane-, butane- or higher sulfonic acids such as dodecanic sulfonic acid, aliphatic perfluorosulfonic acids, such as trifluoromethane sulfonic acid, perfluorobutane sulfonic acid or perfluoroctane sulfonic acid, aliphatic $C_1$-$C_{20}$-carboxylic acids, such as 2-ethylhexyl carboxylic acid, aliphatic perfluoro-carboxylic acids, such as trifluoroacetic acid or perfluoroctane acid, and aromatic sulfonic acids, optionally substituted with $C_1$-$C_{20}$-alkyl groups, such as benzene sulfonic acid, o-toluene sulfonic acid, p-toluene sulfonic acid or dodecylbenzenesulfonic acid and cycloalkane sulfonic acids such as camphor sulfonic acid or tetrafluoroborates, hexafluorophosphates, perchlorates, hexafluoroantimonates, hex-afluoroarsenates or hexachloroantimonates, can be used. The anions of p-toluene sulfonic acid, methane sulfonic acid or camphor sulfonic acid are preferred as monomeric anions.

Cationic polythiophenes, which contain anions as counterions for charge compensation, are often referred to in the specialist world as polythiophene/(poly)-anion-complexes.

Also suitable as polythiophenes which may be used for the formation of the solid electrolyte layer in process steps b) and c) are self-doped polythiophenes that preferably comprise, to the extent of at least 50 %, still more preferably to the extent of at least 75 %, still more preferably to the extent of at least 95 % and most preferably to the extent of 100 %, recurring units of the formula (I)

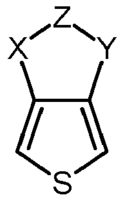

(I)

in which

X,Y are identical or different and denote O, S, N-$R^1$, wherein $R^1$ denotes aryl, $C_1$-$C_{18}$-alkyl or hydrogen,

Z denotes an organic residue carrying at least an anionic substituent, preferebly a -$SO_3^-M^+$ group in which $M^+$ denotes a cation.

According to a preferred embodiment of the recurring units of the formula (I)

Z denotes $-(CH_2)_m-CR^2R^3-(CH_2)_n-$,

wherein

$R^2$ denotes hydrogen, $-(CH_2)_S-O-(CR^4{}_2)_p-SO_3^-M^+$ or $-(CH_2)_p-SO_3^-M'$,

$R^3$ denotes $-(CH_2)_s-O-(CR^4{}_2)_p-SO_3^-M^+$ or $-(CH_2)_p-SO_3^-M^+$,

m,n are identical or different and denote an integer from 0 to 3,

$R^4$ denotes hydrogen or a $C_1$-$C_{10}$ alkyl group, preferably a methyl group,

s denotes an integer from 0 to 10 and

p denotes an integer from 1 to 18,

and wherein $R^1$, $R^2$, $R^3$ and $R^4$ in the formulas above can be the same or different.

The percentage figures stated above are intended in this context to express the numerical content of the units of the structural formula (I) in the total number of monomer units in the self-doped conductive polymer.

Suitable cations $M^+$ are e.g. $H^+$, $Li^+$, $Na^+$, $K^+$, $Rb^+$, $Cs^+$ and $NH_4^+$. Particularly suitable cations are $Na^+$ and $K^+$.

Particularly preferred monomers of the structural formula (I) are those in which

X,Y denote O,
Z denotes $-(CH_2)_m-CR^2R^3-(CH_2)_n-$,
$R^2$ denotes hydrogen or $-(CH_2)_s-O-(CH_2)_p-SO_3-M^+$, $-(CH_2)_P-SO_3^-M^+$ or$-(CH_2)_s-O-(CH_2)_p-CHR^4-SO_3^-M^+$,
$R^3$ denotes $-(CH_2)_s-O-(CH_2)_p-SO_3-M^+$, $-(CH_2)_p-SO_3^-M^+$ or $-(CH_2)_s-O-(CH_2)_p-CHR^4-SO_3^-M^+$,
$M^+$ denotes a cation,
m,n are identical or different and denote an integer from 0 to 3,
$R^4$ denotes hydrogen a methyl group or an ethyl group;
s denotes an integer from 0 to 10 and
p denotes an integer from 1 to 18.

Very particularly preferred monomers of the structural formula (I) are those in which

X,Y denote O,

Z denotes $-(CH_2)-CR^2R^{-3}-(CH_2)_n-$,

$R^2$ denotes hydrogen,

$R^3$ denotes $-(CH_2)_s-O-(CH_2)_p-SO_3^-M^+$, $-(CH_2)_p-SO_3^-M^+$, $-(CH_2)_s-O-(CH_2)_p-CH(CH_3)-SO_3^-M^+$ or $-(CH_2)_s-O-(CH_2)_p-CH(CH_2CH_3)-SO_3^-M^+$,

$M^+$ denotes $Na^+$ or $K^+$,

n denotes 0 or 1,

s denotes 0 or 1 and

p denotes 2, 3, 4 or 5.

Suitable examples of self-doped polymers which can also be used for the formation of the solid electrolyte layer in process steps b) and c) are disclosed in WO-A-2014/048562 and in US-A-2015/0337061. Concrete examples of very particularly preferred self-doped conductive polymers include poly(4-[(2,3-dihydrothi-eno[3,4-b]-[1,4]dioxin-2-yl)methoxy]propane-1-sulfonic acid), poly(4-[(2,3-dihy-drothieno[3,4-b][1,4]dioxin-2-yl)methoxy]butane-1-sulfonic acid) (PEDOT-S), poly(4-[(2,3-dihydrothieno[3,4-b][1,4]dioxin-2-yl)methoxy]butane-2-sulfonic acid) or a mixture thereof.

Preferably, the electrically conductive polymer in the liquid composition used in process step b) is present in the form of particles, particularly preferably in the form of swollen gel-particles of a polythiophene/(poly)-anion-complexes such as PEDOT/PSS. The particles preferably have a specific electrical conductivity of less than 100 S/cm. The specific electrical conductivity of the particles in this context is the specific electrical conductivity of the film in the dry state, which forms from the particles upon drying of the dispersion. Preferably, a liquid composition is used, of which the particles have a specific electrical conductivity of less than 25 S/cm, more preferably less than 10 S/cm, even more preferably less than 4 S/cm and most preferable less than 1 S/cm. In this context it is also preferred that the particles have a specific electrical conductivity of not less than 0.1 S/cm and preferably not less than 0.2 S/cm. Most preferably, the particles have a specific electrical conductivity in the range from 1 S/cm to less than 10 S/cm, even more preferable in the range from 0.1 S/cm to less than 4 S/cm and most preferable in the range of 0.1 S/cm to less than 1 S/cm).

If the electrically conductive polymer in the liquid composition used in process step b) is present in the form of particles, the particles preferably have a diameter $d_{50}$ in a range of from 1 to 100 nm, preferably in a range of from 1 to below 70 nm, preferably in a range of from 1 to 50 nm, particularly preferably in a range from 1 to 40 nm and more particularly preferably in a range of from 5 to 30 nm. The determination of the diameter of the particles is carried out via ultra-centrifuge measurement. It is furthermore preferred that the particles of the electrically conductive polymer in the liquid composition have a $d_{90}$ value of the diameter distribution of less than 150 nm, particularly preferably less than 100 nm, more particularly preferably less than 50 nm. Moreover, the particles of the conductive polymer in the liquid composition preferably have a $d_{10}$ value of the diameter distribution greater than 1 nm, particularly preferably greater than 3 nm, more particularly preferably greater than 5 nm.

The liquid composition used in process step b) preferably comprises a purity with regard to metals and transition metals as described in WO 2010/003874 A2, published document on page 6, lines 10-29. The low concentrations of metals in the liquid composition have the major advantage that the dielectric is not damaged during the formation of the solid electrolyte and during the subsequent operation of the capacitor.

The liquid composition used in process step b) further comprises at least one dispersing agent, wherein water, organic solvents or mixtures of organic solvents and water are preferred as the dispersing agent.

The following solvents can be named as examples of dispersing agents: aliphatic alcohols such as methanol, ethanol, i-propanol and butanol; aliphatic ketones such as acetone and methylethylketone; aliphatic carboxylic esters such as acetic acid ethylester and acetic acid butyl ester; aromatic hydrocarbons such as toluene and xylene; aliphatic hydrocarbons such as hexane, heptane and cyclohexane; chlorinated hydrocarbons such as dichloromethane and dichloroethane; aliphatic nitriles such as acetonitrile, aliphatic sulfoxides and sulfones such as dimethylsulfoxide and sulfolane; aliphatic carboxylic acid amides such as methylacetamide, dimethylacetamide and dimethylformamide; aliphatic and araliphatic ethers such as diethylether and anisole. Moreover, water or a mixture of water with the above-named organic solvents can also be used as a dispersing agent.

Preferred dispersing agents are water or other protic solvents such as alcohols, for example, methanol, ethanol, i-propanol and butanol, and mixtures of water with these alcohols. The particularly preferred dispersing agent is water.

Moreover, the liquid composition used in process step b) can comprise further components such as surface-active substances, for example, ionic and non-ionic surfactants or adhesion promoters, such as organo-functional silanes or their hydrolysates, for example, 3-glycidoxy-propyltrialkoxysilane, 3-aminopropyl-triethoxysilane, 3-mercaptopropyl-trimethoxysilane, 3-methacryloxypropyl-trimethoxysilane, vinyltrimethoxysilane or octyltriethoxysilane, crosslinking agents such as melamine compounds, blocked isocyanates, functional silanes - for example, tetraethoxysilane, alkoxysilane hydrolysates, for example, based on tetraethoxysilane, epoxysilanes, such as 3-glycidoxypropyltrialkoxysilane - polyurethanes, polyacrylates or polyolefin dispersions. The liquid composition used in process step b) can also comprise

one or more organic binding agents soluble in organic solvents as described in WO 2009/141209 A1 on page 12, lines 16-34. The liquid composition can have a pH value from 1 to 14, a pH value from 1 to 8 is preferred. For corrosion-sensitive dielectrics, such as aluminium oxides or niobium oxides, liquid compositions with a pH value from 2.5 to 8 are preferred, in order to avoid damaging the dielectric, more preferred 2.5 to 7, most preferred 3 to 6.

In order to adjust the pH value, the bases or acids described in WO 2010/003874 A2 on page 4, lines 13-32, for example, can be added to the liquid composition. Such additives, which do not impair the film formation of the liquid composition and are not volatile at relatively high temperatures, for example, at soldering temperatures, but remain within the solid electrolyte under these conditions, such as the bases 2-dimethylaminoethanol, 2,2'-iminodiethanol or 2,2',2"-nitrilotriethanol and the acid polystyrene sulfonic acid, are preferred.

The viscosity of the liquid composition used in process step b) can, dependent upon the process of application, be between 0.1 and 1000 mPa×s (measured with a rheometer at 20°C and a shear rate of 100 $s^{-1}$). Preferably, the viscosity is 1 to 200 mPa×s, particularly preferably between 10 to 150 mPa×s, more particularly preferably 10 to 100 mPa×s.

The solids content of the liquid composition used in process step b) preferably is in a range of from 1 to 30 wt.-%, particularly preferably in a range of from 1 to 20 wt.-% and most preferably in a range of from 1 to 10 wt.-%, in each case based on the total weight of the liquid composition. The solids content is determined by drying the dispersion at a temperature which is sufficiently high to remove the dispersing agent, but which does not break down the solid material.

After the porous electrode bodies have been impregnated with the liquid composition described above, the dispersing agent is at least partially removed in process step c), so that a solid electrolyte layer is formed, which covers the dielectric partially or completely. In this context, it is preferable that the covering of the dielectric by the solid electrolyte layer preferably amounts to at least 50 %, particularly preferably at least 70 % and most preferably at least 80 %, wherein the measurement of the capacitance of the capacitor in a dry and wet condition at 120°C allows a determination as described in DE-A-10 2005 043 828.

The removal of the dispersing agent is preferably carried out in that the porous electrode body is removed from the liquid composition used in process step b) and is subsequently dried, wherein the drying preferably takes place at a temperature in a range from 20°C to 200°C, particularly preferably in a range from 50°C to 180°C and more preferably in a range from 80°C to 150°C. The drying conditions (i. e. drying time, drying pressure and drying temperature) are preferably adjusted to be within a range that ensures that at least 50 wt.-%, more preferably at least 75 wt.-%, even more preferably at least 90 wt.-%, even more preferably at least 95 wt.-% and most preferably at least 99 wt.-% of the total amount of the dispersing agent is removed when forming the solid electrolyte layer. In a particularly preferred embodiment of the process according to the present invention the drying conditions are adjusted to be within a range that ensures that the dispersing agent is completely removed when forming the solid electrolyte.

Process step d)

In process step d) of the process according to the invention at least a part of the pores of the porous electrode body obtained in process step c) (i. e. the porous electrode body in which the dielectric is at least partially covered with a solid electrolyte layer) is filled with an impregnation solution comprising at least one impregnation solvent.

The immersion in or respectively the impregnation with the impregnation solution is preferably implemented for a duration in a range of from 1 second to 120 min, particularly preferably in a range of from 10 seconds to 60 min and most preferably in a range of from 30 seconds to 15 min. The immersion is preferably carried out in that the porous electrode body obtained in process step c) is immersed at least partially in the impregnation solution or the impregnation solution is injected into the porous electrode body and is accordingly impregnated with this impregnation solution. The introduction of the impregnation solution into the porous electrode body can be facilitated, for example, by increased or reduced pressure, vibration, ultrasound or heat.

When impregnating the pores of the porous electrode body with the impregnation solution in process step d), it is preferred to ensure that impregnation is accomplished to such an extent that at least 50 vol-%, more preferably at least 75 vol-% and even more preferably at least 90 vol-% of the open pore volume of the porous electrode body obtained in process step c) are filled with the impregnation solution, wherein the impregnation solution preferably comprises the at least one impregnation solvent in an amount of at least 50 wt.-%, preferably of at least 75 wt.-%, even more preferably of at least 90 wt.-%, and most preferable of at least 95 wt.-%, in each case based on the total weight of the impregnation solution. In process step d) it is particularly preferred that these filling amounts are reached immediately before performing process step e), i. e. before encapsulating the porous electrode body in order to prevent any further evaporation of the impregnation solvent out of the pores. The impregnation solution applied in process step d) thus remains - at least to a certain extent, preferably completely - within the pores of the porous electrode body before it is encapsulated.

Preferred impregnation solvents that are used in the process according to the present invention fulfil at least one of the following properties, more preferably they fulfil both of these properties:

(β1) they have a boiling point (determined at 1013 hPa) of at least 200°C and less than 330°C;

(β2) they have a melting point of less than 15°C, preferably of less than 5°C and even more preferably of less than -5°C.

In this context it is particularly preferred that the at least one impregnation solvent is a compound that comprises two hydroxy groups or is a compound that comprises one hydroxy group and one ether group, preferably one alkyl ether group, More preferably, the at least one impregnation solvent is a mono, di-, tri- or tetra alkylene glycol, preferably diethylene glycol, triethylene glycol, tetraethylene glycol, dipropylene glycol or tripropylene glycol, a mono-, di- or tri alkylene glycol monoether, preferably diethylene glycol monomethyl ether, diethylene glycol monoethyl ether or diethylene glycol monobutyl ether, an alkanediol or an alkanediol monoether,

Preferred alkanediols are selected from the group consisting of 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol, 2-methyl-2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2-heptanediol, 1,3-heptanediol, 1,4-heptanediol, 1,5-heptanediol, 1,6-heptanediol, 1,7-heptanediol, 2,3-heptanediol, 2,4-heptanediol, 2,5-heptanediol, 2,6-heptanediol, 3,4-heptanediol, 3,5-heptanediol, 1,2-octanediol, 1,3-octanediol, 1,4-octanediol, 1,5-octanediol, 1,6-octanediol, 1,7-octanediol, 1,8-octanediol, 2,3-octanediol, 2,4-octanediol, 2,5-octanediol, 2,6-octanediol, 2,7-octanediol, 3,4-octanediol, 3,5-octanediol, 3,6-octanediol, 4,5-octanedioland any further alkanediol having a molecular weight in the range from 70 to 180 g/mol. Furthermore suitable as an impregnation solvent are derivatives of the above mentioned alkanediols in which one hydrogen atom that is bonded to a carbon atom is substituted by an alkyl group such as a methyl group or an ethyl group.

Particular preferable is a polyglycol with 2-4 repetition units. More preferably, the at least one impregnation solvent is selected from the group consisting of diethylene glycol, triethylene glycol, tetraethylene glycol and a mixture of at least two thereof, wherein diethylene glycol and triethylene glycol are most preferred.

The impregnation solution may, in addition to the impregnation solvent, comprise further components such as stabilizers (such as those mentioned previously) and/or further solvents, particularly low-boiling solvents having a boiling point (determined at 1013 hPa) of less than 150°C, preferably of less than 120°C. However, it is preferred that the impregnation solution that is used in process step d) comprises the at least one impregnation solvent in an amount of at least 50 wt.-%, preferably of at least 75 wt.-% and even more preferably of at least 90 wt.-%, in each case based on the total weight of the impregnation solution. In case of two of more impregnation solvents, these amounts represent the total amount of impregnation solvents.

Encapsulation in process step e)

After in process step d) at least a part of the pores of the porous electrode body obtained in process step c) has been filled with an impregnation solution, the electrolytic capacitors can be finished, particularly encapsulated, in a manner known to the person skilled in the art. In this context it is preferred that less than 20 wt.-%, preferably less than 10 wt.-% and more preferably less than 1 wt.-% of the impregnation solution that has been used in process step d) to fill a part of the pores of the porous electrode body evaporates before encapsulating the porous electrode body and wherein it is even more preferred that essentially the entire amount, most preferred the entire amount, of the impregnation solution that has been used in process step d) to fill a part of the pores of the porous electrode body remains in the porous electrode body before it is encapsulated

In the case of a tantalum electrolytic capacitor, the capacitor body can be coated, for example, with a graphite layer and a silver layer, as known from DE-A-10 2005 043 828, while in the case of an aluminium wound capacitor corresponding to the teaching of US 7,497,879 B2, the capacitor body is built into an aluminium cup, provided with a sealing rubber and firmly closed in a mechanical manner by flanging.

Encapsulation is preferably accomplished by sealing the capacitor body with resins, such as epoxy resins or thermoplastic resins like those disclosed in EP 0 447 165 A2. In case of an aluminium electrolytic capacitor encapsulation is preferably accomplished by providing the porous electrode body obtained in process step e) with the aluminium cup and closing it with the sealing rubber.

Heat treatment in process step f)

In process step f) the encapsulated electrode body obtained in process step e) is heated at a temperature of higher than 50°C, more preferably of higher than 75°C and even more preferably of higher than 100°C for more than 10 minutes, preferably for more than 20 minutes and more preferably of more than 30 minutes. In this context it is also preferred that the treatment temperature does not exceed 300°C and that the duration of the heat treatment does not exceed 24 hours, preferable not 3 hours and most preferable not 1 hour. Usually, the encapsulated capacitor is heated

at a temperature in the range from 100 to 200°C for 10 to 60 minutes.

The invention is now explained in greater detail with reference to non-limiting drawings and examples.

Fig. 1 shows a schematic sectional view through a part of a capacitor obtained by the process according to the invention. The capacitor comprises a porous electrode body 1 comprising pores 5, made mostly from a porous electrode material 2 such as aluminium. On the surface of the electrode material 2, a dielectric 3 is formed as a thin layer, so that an anode body is formed which is still porous, comprising the electrode body 1 made of the electrode material 2 and the dielectric 3. On the dielectric 3, there follows, optionally after further layers, a layer of a solid electrolyte 4 (for example, made of PEDOT/PSS particles), so that a capacitor body is formed, comprising the electrode body 1 made of the electrode material 2, the dielectric 3 and the solid electrolyte 4. The pores 5 of the porous electrode body 1 are least partially filled with an impregnation solution (for example, with diethylene glycol, triethylene glycol, tetraethylene glycol or a mixture of at least two thereof; see the grey shading in figure 1).

Fig. 2 shows an aluminium capacitor according to the present invention that comprises capacitor element 8 (porous electrode material 2 coated with dielectric 3 and solid electrolyte 4 and lead wires 10 which contact the porous anode foil and an opposite cathode foil, both foils being wound with two separator papers between both foils and being fixed with a winding end tape). Capacitor element 8 is held in an aluminium casing 7 in the shape of a bottomed cylinder, a rubber sealing 9 is attached in the opening of the casing.

MEASUREMENT METHODS:

Solids content

In order to determine the solids content, 5 g of the of the liquid composition used in process step b) were dried for 15 h at 100°C, and the solids content was determined by differential weighing.

pH-value

The pH-value is determined with a pH meter. After calibration the pH electrode is put into the slowly stirred dispersion or solution until the reading of the pH is constant.

Conductivity

A cleaned glass substrate was laid on a spin coater and 10 ml of the liquid composition used in process step b) was distributed over the substrate. The remaining solution was then spun off by rotation of the plate. Thereafter, the substrate thus coated was dried for 15 minutes at 130°C on a hot plate. The layer thickness **d** was then determined by means of a layer thickness measuring device (Tencor, Alphastep 500). The conductivity was determined in that Ag electrodes of 2.0 cm length **L** were vapor deposited at a distance **a** of 1.0 cm via a shadow mask. The obtained structure of Ag electrodes and polymer film in between these electrodes was electrically isolated from the surrounding polymer film on the substrate by scratching off the polymer with a razor blade to form a rectangular frame. The surface resistance **R** of the polymer film was determined with an electrometer (Keithley 614) by contacting the Ag electrodes with gold contact pins.

The specific electrical resistivity p (in unit "Ωcm") is calculated, using equation:

$$\rho = R \times L \times d/a.$$

The conductivity σ (in unit "S/cm") is calculated using equation:

$$\sigma = 1/\rho$$

Determination of particle diameter ($d_{50}$)

The particle diameter is determined as disclosed by H. G. Müller in Colloid Polym. Sci. 267, 1113-1116 (1989). The $d_{50}$ value of the diameter distribution states that 50% of the total weight of all particles of the conductive polymer in the dispersion can be assigned to those particles which have a diameter of less than or equal to the $d_{50}$ value.

Equivalent series resistance (ESR)

The equivalent series resistance (in mQ) was determined at 20°C at 100 kHz by means of an LCR meter (Agilent 4284A). In each capacitor experiment 2 capacitors have been prepared and the average ESR-value was determined.

Capacitance (CAP)

The capacitance was determined at 20°C at 120Hz by means of an LCR meter (Agilent 4284A). In each capacitor experiment 2 capacitors have been prepared and the average capacitance-value was determined.

Surge test

The capacitor is connected through a 100 mOhm resistor in series to a power bank and is subjected to voltage pulses of 18.4 V with a pulse period of 30 s voltage on (charging of the capacitor) and 30 s voltage off (discharging the capacitor). The peak current for each charging and discharging is about 80 A. One surge cycle consists of a charging and a discharging and has a duration of 60 s. In each capacitor experiment 2 capacitors have been prepared and the average capacitance-value was determined.

EXAMPLES

Process Step a)

A porous electrode body for a cylindrical aluminum capacitor (as described in Fig. 2) having a rated voltage of 16 V was produced in the following way.
An aluminum foil was etched, thereby to roughen the surface of the aluminum foil. The aluminum foil was then subjected to anodic oxidation using an aqueous ammonium adipate solution, thereby to form a dielectric layer on the surface of the aluminum foil. Thus, an anode foil was produced.
A second aluminum foil was etched, thereby to roughen the surface of the aluminum foil. Thus, a cathode foil was thus prepared.
An anode lead wire and a cathode lead wire were connected to the anode and the cathode foil, respectively. The anode and the cathode foil were wound together with two separator papers between both foils. A tape was put on the outside of the wound element to avoid unwinding of the foils. The wound element was then subjected to another anodic oxidation to form a dielectric layer on the cut edges of the anode foil.
Thus, an anode body comprising an electrode body having a dielectric layer was prepared.

Process step b)

The porous electrode body from process step a) was placed into a chamber with a bath of a liquid composition comprising an electrically conductive polymer. Air pressure in the chamber was reduced to 100 hPa. The anode body was dipped into the liquid composition for 300 s. Then, the anode body was extracted from the liquid composition and the chamber was vented to atmospheric pressure.

Process step c)

The anode body was dried at 120°C for 30 min and then at 150°C for 30 min.
Process step b) and c) were carried out a further time. Thus, a capacitor body was obtained.

Process step d)

The capacitor body of process step c) was dipped into the impregnation solution for 300 s and then extracted from the impregnation solution.

Process step e)

The capacitor body of process step d) was placed in a cylindrical aluminum housing and sealed with a rubber sealing.

Process step f)

The capacitor body of process step e) was heated for 1 h at 135°C.

Preparation Example 1

An aqueous poly(3,4-ethylenedioxy-thiophene)/polystyrenesulphonate solution (Clevios P VP AI 4083, Heraeus Deutschland) was concentrated to a solid content of 1.8 % and homogenized with a high-pressure homogenizer under a pressure of 1500 bar 10 times. The pH of the solution was adjusted to 6 using ammonia. Thus, a liquid composition which comprises an electrically conductive polymer was obtained. The conductivity of the liquid composition was determined to 0.001 S/cm. The $d_{50}$ value of the particle distribution was 75 nm.

Preparation Example 2

An aqueous poly(3,4-ethylenedioxy-thiophene)/polystyrenesulphonate solution (Clevios P VP CH 8000, Heraeus Deutschland) was concentrated to a solid content of 1.8 % and homogenized with a high-pressure homogenizer under a pressure of 1500 bar 10 times. 99 g of this polymer dispersion and 1 g of dimethyl sulfoxide were mixed. The pH of the solution was adjusted to 6 using ammonia. Thus, a liquid composition which comprises an electrically conductive polymer was obtained. The conductivity of the liquid composition was determined to 0.05 S/cm. The $d_{50}$ value of the particle distribution was 30 nm

Preparation Example 3

An aqueous poly(3,4-ethylenedioxy-thiophene)/polystyrenesulphonate solution (Clevios PH, Heraeus Deutschland) was concentrated to a solid content of 1.8 % and homogenized with a high-pressure homogenizer under a pressure of 1500 bar 10 times. The pH of the solution was adjusted to 6 using ammonia. Thus, a liquid composition which comprises an electrically conductive polymer was obtained. The conductivity of the liquid composition was determined to 0.1 S/cm. The $d_{50}$ value of the particle distribution was 45 nm.

Preparation Example 4

An aqueous poly(3,4-ethylenedioxy-thiophene)/polystyrenesulphonate solution (Clevios PH 500, Heraeus Deutschland) was concentrated to a solid content of 1.8 % and homogenized with a high-pressure homogenizer under a pressure of 1500 bar 10 times. The pH of the solution was adjusted to 6 using ammonia. Thus, a liquid composition which comprises an electrically conductive polymer was obtained. The conductivity of the liquid composition was determined to 0.3 S/cm. The $d_{50}$ value of the particle distribution was 26 nm.

Preparation Example 5

99.9 g of the liquid composition of Preparation Example 4 and 0.1 g dimethyl sulfoxide were mixed. Thus, a liquid composition which comprises an electrically conductive polymer was obtained. The conductivity of the liquid composition was determined to 3 S/cm.

Preparation Example 6

99.7 g of the liquid composition of Preparation Example 4 and 0.3 g dimethyl sulfoxide were mixed. Thus, a liquid composition which comprises an electrically conductive polymer was obtained. The conductivity of the liquid composition was determined to 9 S/cm.

Preparation Example 7

99.4 g of the liquid composition of Preparation Example 4 and 0.6 g ethylene glycol were mixed. Thus, a liquid composition which comprises an electrically conductive polymer was obtained. The conductivity of the liquid composition was determined to 20 S/cm.

Preparation Example 8

97.5 g of the liquid composition of Preparation Example 4 and 2.5 g dimethyl sulfoxide were mixed. Thus, a

liquid composition which comprises an electrically conductive polymer was obtained. The conductivity of the liquid composition was determined to 91 S/cm.

Preparation Example 9

95 g of the liquid composition of Preparation Example 4 and 5 g ethylene glycol were mixed. Thus, a liquid composition which comprises an electrically conductive polymer was obtained. The conductivity of the liquid composition was determined to 306 S/cm.

Preparation Example 10

90 g of the liquid composition of Preparation Example 4 and 10 g 1,5-pentanediol were mixed. Thus, a liquid composition which comprises an electrically conductive polymer was obtained. The conductivity of the liquid composition was determined to 346 S/cm.

Example 1

Capacitors were produced the following way:
First anode bodies according to process step a) were prepared. Then, the anode bodies were processed according to process step b) and c) using the liquid composition which comprises an electrically conductive polymer of Preparation Example 4. Process step b) and c) were carried out a further time. Thus, a capacitor body was obtained.

Next, the obtained capacitor bodies were impregnated according to process step d) using ethylene glycol (EG) as impregnation solution. The capacitor bodies were encapsulated according to process step e) and finally heat-treated according to process step f) to obtain finished capacitors. The ESR of the capacitors is given in Table 1.

Example 2

Capacitors were produced and evaluated the same way as in Example 1, however, as impregnation solution in process step d) diethylene glycol (DEG) was used. The ESR of the capacitors is given in Table 1.

Example 3

Capacitors were produced and evaluated the same way as in Example 1, however, as impregnation solution in process step d) triethylene glycol (TEG) was used. The ESR of the capacitors is given in Table 1.

Example 4

Capacitors were produced and evaluated the same way as in Example 1, however, as impregnation solution in process step d) tetraethylene glycol (TetraEG) was used. The ESR of the capacitors is given in Table 1.

Example 5

Capacitors were produced and evaluated the same way as in Example 1, however, as impregnation solution in process step d) 1,2-propanediole was used. The ESR of the capacitors is given in Table 1.

Example 6

Capacitors were produced and evaluated the same way as in Example 1, however, as impregnation solution in process step d) 1,5-pentanediole was used. The ESR of the capacitors is given in Table 1.

Comparison Example 1

Capacitors were produced and evaluated the same way as in Example 1, however, as impregnation solution in process step d) dimethyl sulfoxide (DMSO) was used. The ESR of the capacitors is given in Table 1.

Comparison Example 2

Capacitors were produced and evaluated the same way as in Example 1, however, as impregnation solution

in process step d) but γ-butyrolactone (GBL) was used. The ESR of the capacitors is given in Table 1.

Comparison Example 3

Capacitors were produced and evaluated the same way as in Example 1, however, as impregnation solution in process step d) polyethylene glycol 400 (PEG400) was used. The ESR of the capacitors is given in Table 1.

Table 1

| | impregnation solution | ESR [mOhm] |
|---|---|---|
| Example 1 | EG | 25 |
| Example 2 | DEG | 12 |
| Example 3 | TEG | 13 |
| Example 4 | TetraEG | 15 |
| Example 5 | 1,2-Propanediole | 18 |
| Example 6 | 1,5-Pentanediole | 17 |
| Comp. Example 1 | DMSO | 34 |
| Comp. Example 2 | GBL | 1883 |
| Comp. Example 3 | PEG400 | 31 |

Example 7

Capacitors were produced the following way:
First anode bodies according to process step a) were prepared. Then, the anode bodies were processed according to process step b) and c) using the liquid composition which comprises an electrically conductive polymer of Preparation Example 3. Process step b) and c) were carried out a further time. Thus, a capacitor body was obtained.
Next, the obtained capacitor bodies were impregnated according to process step d) using diethylene glycol as impregnation solution. The capacitor bodies were encapsulated according to process step e) and finally heat-treated according to process step f) to obtain finished capacitors.
The capacitance of the capacitors was measured at 20°C before and after a surge test with 1000 surge cycles. The relative capacitance after surge test was calculated according to the following formula:

$$\text{(relative capacitance after surge test)} = \text{(capacitance at 20°C after surge test)/(capacitance at 20°C before surge test)}$$

The relative capacitance after surge test is given in Table 2.

Example 8

Capacitors were produced and evaluated the same way as in Example 7, however, as electrically conductive polymer Preparation Example 4 was used. The relative capacitance after surge test is given in Table 2.

Example 9

Capacitors were produced and evaluated the same way as in Example 7, however, as electrically conductive polymer Preparation Example 5 was used. The relative capacitance after surge test is given in Table 2.

Example 10

Capacitors were produced and evaluated the same way as in Example 7, however, as electrically conductive polymer Preparation Example 6 was used. The relative capacitance after surge test is given in Table 2.

Example 11

Capacitors were produced and evaluated the same way as in Example 7, however, as electrically conductive polymer Preparation Example 7 was used. The relative capacitance after surge test is given in Table 2.

Example 12

Capacitors were produced and evaluated the same way as in Example 7, however, as electrically conductive polymer Preparation Example 8 was used. The relative capacitance after surge test is given in Table 2.

Comparison Example 4

Capacitors were produced and evaluated the same way as in Example 7, however, as electrically conductive polymer Preparation Example 1 was used. The relative capacitance after surge test is given in Table 2.

Comparison Example 5

Capacitors were produced and evaluated the same way as in Example 7, however, as electrically conductive polymer Preparation Example 2 was used. The relative capacitance after surge test is given in Table 2.

Comparison Example 6

Capacitors were produced and evaluated the same way as in Example 7, however, as electrically conductive polymer Preparation Example 9 was used. The relative capacitance after surge test is given in Table 2.

Comparison Example 7

Capacitors were produced and evaluated the same way as in Example 7, however, as electrically conductive polymer Preparation Example 10 was used. The relative capacitance after surge test is given in Table 2.

Table 2

| | Conductivity of liquid composition [S/cm] | relative capacitance after surge test (1000 cycles) |
|---|---|---|
| Example 7 | 0.1 | 90 |
| Example 8 | 0.3 | 100 |
| Example 9 | 3 | 96 |
| Example 10 | 9 | 94 |
| Example 11 | 20 | 87 |
| Example 12 | 91 | 84 |
| Comparison Example 4 | 0.001 | 59 |
| Comparison Example 5 | 0.05 | 64 |
| Comparison Example 6 | 306 | 76 |
| Comparison Example 7 | 346 | 71 |

Example 13

Capacitors were produced the following way:
First anode bodies according to process step a) were prepared. Then, the anode bodies were processed according to process step b) and c) using the liquid composition which comprises an electrically conductive polymer of Preparation Example 4. Process step b) and c) were carried out a further time. Thus, a capacitor body was obtained.
Next, the obtained capacitor bodies were impregnated according to process step d) using diethylene glycol as impregnation solution. The capacitor bodies were encapsulated according to process step e) and finally heat-treated

according to process step f) to obtain finished capacitors.

The capacitance of the capacitors was measured at 20°C before and after a storage for 1500 h at a storage temperature of 125°C. The relative capacitance after 1500 h storage at 125°C was calculated according to the following formula:

$$\text{(relative capacitance after 1500 h at 125°C)} = \text{(capacitance at 20°C after 1500 h storage at 125°C)/(capacitance at 20°C before 1500 h storage at 125°C)}$$

The relative capacitance after 1500 h at 125°C in % are given in Table 3.

Example 14

Capacitors were produced and evaluated the same way as in Example 13, however, as impregnation solution a mixture of 99 wt.-% diethylene glycol and 1 wt.-% tannic acid was used. The relative capacitance after 1500 h at 125°C in % are given in Table 3.

Comparison Example 8

Capacitors were produced and evaluated the same way as in Example 13, however, capacitor bodies of process step d) were dried at 120°C for 30 min and then at 150°C for 30 min prior to process step e). Furthermore, process step f) was omitted.

The relative capacitance after 1500 h at 125°C in % are given in.in Table 3.

Table 3

| | relative capacitance after 1500 h at 125°C |
|---|---|
| Example 13 | 89% |
| Example 14 | 93 % |
| Comparison Example 8 | 76% |

**KEY TO REFERENCE NUMBERS**

1 porous electrode body
2 electrode material
3 dielectric
4 solid electrolyte
5 pore
6 impregnation solution
7 encapsulation (aluminium housing)
8 capacitor element (porous electrode material coated with dielectric and solid electrolyte and comprising the impregnation solvent)
9 rubber sealing
10 lead wires

**Claims**

**1.** A process for manufacturing a capacitor, comprising the process steps:

a) provision of a porous electrode body (1) made of an electrode material (2), wherein a dielectric (3) at least partially covers a surface of this electrode material (2);

b) introduction of a liquid composition which comprises an electrically conductive polymer and a dispersing agent into at least a part of the porous electrode body (1) provided in process step a), wherein a conductive layer made from the liquid composition has a conductivity of less than 100 S/cm;
c) at least partial removal of the dispersing agent from the porous electrode body (1) obtained in process step b) for the formation of a solid electrolyte layer (4) that at least partially covers a surface of the dielectric (3);
d) filling at least a part of the pores (5) of the porous electrode body (1) obtained in process step c) with an impregnation solution comprising at least one impregnation solvent, wherein the at least one impregnation solvent has a boiling point (determined at 1013 hPa) of at least 150°C;
e) encapsulation of the porous electrode body (1) obtained in process step d);
f) heating the encapsulated electrode body (1) obtained in process step e) at a temperature of higher than 50°C for more than 10 minutes.

2. The process according to claim 1, wherein a conductive layer made from the liquid composition used in process step b) has a conductivity of not less than 0.1 S/cm.

3. The process according to claim 1 or 2, wherein the electrically conductive polymer in the liquid composition used in process step b) is present in the form of particles, the particles having a diameter $d_{50}$ in a range of from 1 to 100 nm.

4. The process according to any of claims 1 to 3, wherein the electrically conductive polymer in the liquid composition used in process step b) is present in the form a polythiophene/(poly)anion-complex, wherein the polythiophene is poly(3,4-ethylenedioxythiophene) and the polyanion is an anion of polystyrene sulfonic acid.

5. The process according to any of the claims 1 to 4, wherein the liquid composition applied in process step b) comprises less than 3 wt.-% of a high-boiling solvent having a boiling point (determined at 1013 hPa) of at least 150°C.

6. The process according to any of the claims 1 to 5, wherein the at least one impregnation solvent in the impregnation solution applied in process step d) comprises at least one hydroxy group and has a molecular weight in the range from 70 to 195 g/mol.

7. The process according to any of the claims 1 to 6, wherein the at least one impregnation solvent in the impregnation solution applied in process step d) has a melting point of less than 15°C.

8. The process according to any of the claims 1 to 7, wherein impregnation solvent in the impregnation solution applied in process step d) has a boiling point (determined at 1013 hPa) of at least 200°C and less than 330°C.

9. The process according to any of the claims 1 to 8, wherein the impregnation solution applied in process step d) has an ionic conductivity of less than 1000 µS/cm.

10. The process according to any of the claims 1 to 9, wherein the at least one impregnation solvent in the impregnation solution applied in process step d) is a polyglycol with 2-4 repetition units.

11. The process according to claim 10, wherein the at least one impregnation solvent in the impregnation solution applied in process step d) is selected from the group consisting of diethylene glycol, triethylene glycol, tetraethylene glycol and a mixture of at least two thereof.

12. The process according to any of the claims 1 to 11, wherein the impregnation solution that is used in process step d) comprises a stabilizer.

13. The process according to claim 12, wherein the stabilizer is gallic acid or gallic acid esterified with sugars.

14. The use of a capacitor obtainable by the process according to any of claims 1 to 13 in electronic circuits.

15. An electronic circuit comprising a capacitor obtainable by the process according to any of claims 1 to 13.

Fig. 1

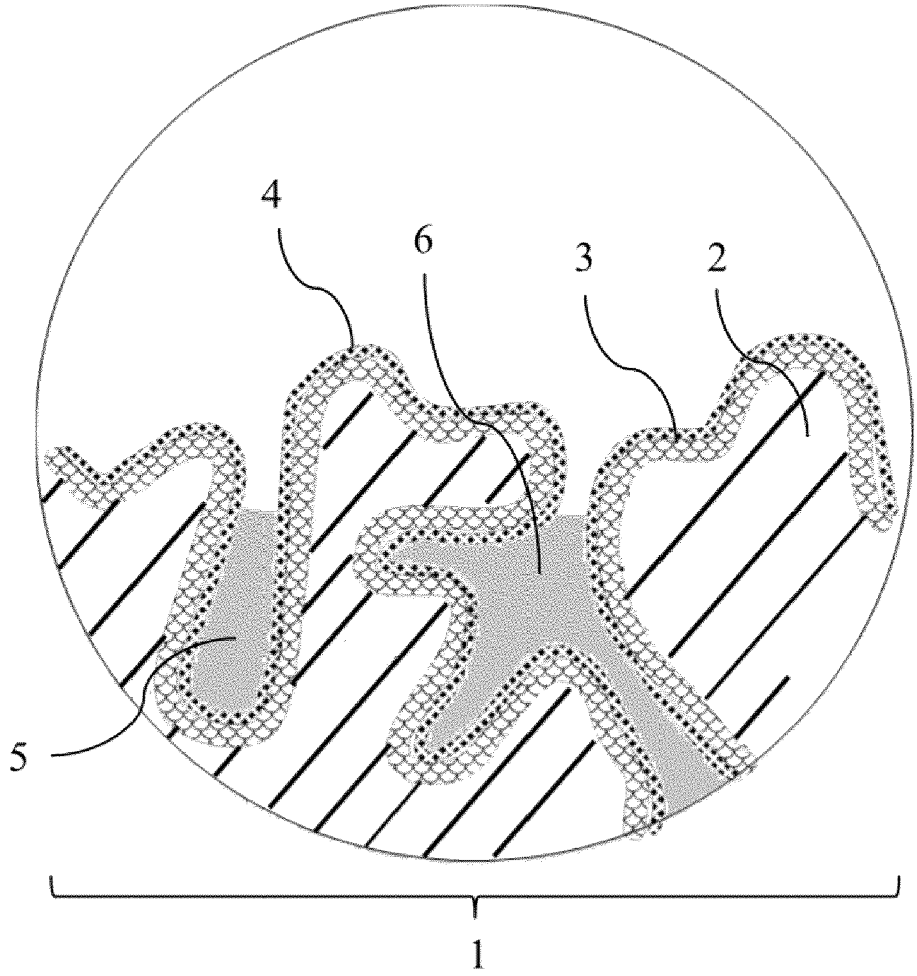

Fig. 2

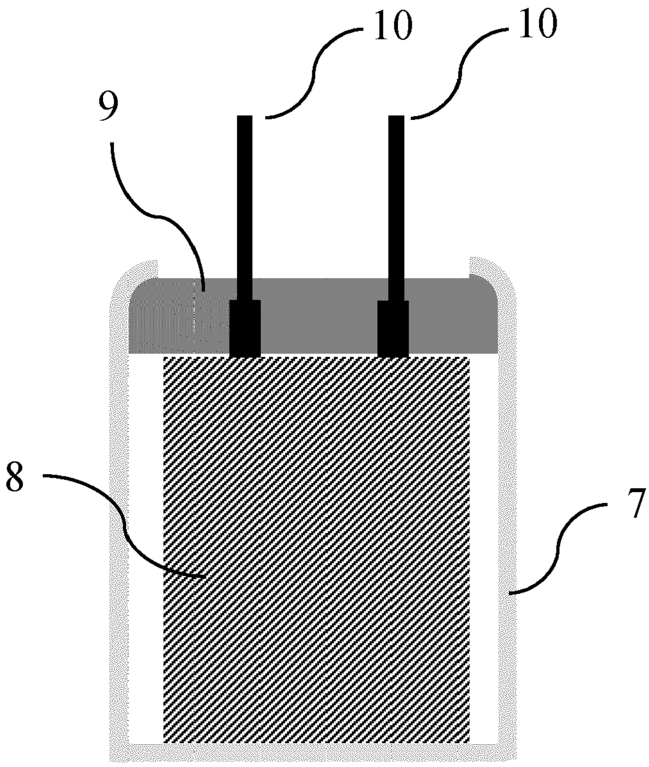

Europäisches Patentamt
European Patent Office
Office européen des brevets

# EUROPEAN SEARCH REPORT

Application Number
EP 22 21 4355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 889 980 A1 (HERAEUS DEUTSCHLAND GMBH & CO KG [DE]) 6 October 2021 (2021-10-06)<br>* paragraphs [0011], [0032], [0035], [0100], [0101], [0106]; claim 1 *<br>* paragraphs [0115], [0118], [0119], [0121], [0123], [0158] *<br>----- | 1-15 | INV.<br>H01G9/00<br>H01G9/028<br>H01G9/052<br>H01G9/025<br><br>ADD.<br>H01G9/15<br>H01G9/055<br>H01G9/07 |
| A | US 9 734 952 B2 (AVX CORP [US]) 15 August 2017 (2017-08-15)<br>* column 1, line 42 *<br>* column 2, line 24 *<br>* column 9, line 20 *<br>* column 11, line 29 *<br>* column 12, lines 1,37 *<br>* column 17, line 65 *<br>----- | 1,3-13 | |

TECHNICAL FIELDS SEARCHED (IPC)

H01G

The present search report has been drawn up for all claims

1

| Place of search | Date of completion of the search | Examiner |
|---|---|---|
| Munich | 13 March 2023 | El-Sayed, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 21 4355

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | | Publication date |
|---|---|---|---|---|---|---|
| EP 3889980 | A1 | 06-10-2021 | CN | 115380344 | A | 22-11-2022 |
| | | | EP | 3889980 | A1 | 06-10-2021 |
| | | | KR | 20220161456 | A | 06-12-2022 |
| | | | TW | 202209370 | A | 01-03-2022 |
| | | | WO | 2021198214 | A2 | 07-10-2021 |
| US 9734952 | B2 | 15-08-2017 | CN | 103578768 | A | 12-02-2014 |
| | | | DE | 102013213728 | A1 | 23-01-2014 |
| | | | JP | 6317552 | B2 | 25-04-2018 |
| | | | JP | 2014022748 | A | 03-02-2014 |
| | | | US | 2015364263 | A1 | 17-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102005043828 A
- WO 2012041507 A1
- EP 1798259 A1
- EP 1043720 A1
- WO 2008055834 A1
- US 7497879 B2
- WO 2014048562 A
- US 20150337061 A
- WO 2010003874 A2
- WO 2009141209 A1
- EP 0447165 A2

### Non-patent literature cited in the description


- **HOUBEN WEYL.** Methoden der organischen Chemie. *Makromolekulare Stoffe,* 1987, vol. E 20
- *Methods of Organic Chemistry, Macromolecular Substances,* 1141
- **H. G. MÜLLER.** *Colloid Polym. Sci.,* 1989, vol. 267, 1113-1116